# EUROPÄISCHE PATENTSCHRIFT

(11) **EP 1 878 937 B1**
(45) Veröffentlichungstag und Bekanntmachung des Hinweises auf die Patenterteilung: **27.08.2008**
(21) Anmeldenummer: 07009907.2
(22) Anmeldetag: 18.05.2007
(51) Int. Cl.: F16F 1/38

(54) **Elastisches Fahrwerkslager**
Elastic undercarriage bearing
Support de train d'atterrissage élastique

(30) Priorität: 12.07.2006 DE 102006032511
(43) Veröffentlichungstag der Anmeldung: 16.01.2008
(73) Patentinhaber: Benteler Automobiltechnik GmbH, 33104 Paderborn (DE)
(72) Erfinder: Koczar, Peter, 65205 Wiesbaden (DE)
(74) Vertreter: Griepenstroh, Jörg

(56) Entgegenhaltungen:
- WO-A-03/091594
- DE-A1- 4 240 188
- DE-A1- 4 430 037
- US-A- 1 983 796
- US-A- 3 685 772
- US-A- 4 316 643
- US-A1- 2003 222 384
- US-A1- 2005 104 314

## Beschreibung

Der Erfindung betrifft ein elastisches Fahrwerkslager gemäß den Merkmalen im Obergriff des Patentanspruchs 1. Ein solches Lager ist z.B. aus der DE-A-4 240 188 bekannt.

Elastische Fahrwerkslager kommen bei Fahrwerken z.B. für die Lagerung der Führungslenker zum Einsatz. Bei Mehrlenkerachsen, bei denen eine Vielzahl von elastischen Gummi-Metall-Lagern verbaut werden, sind die Nebenfederraten der Lagerungen spürbar. Die Nebenfederraten werden unter anderem durch die Torsions- und Kardaniksteifigkeiten der Fahrwerkslager hervorgerufen. Ein konventionelles Fahrwerkslager hat die Funktion, die Lenker kinematisch zu fixieren und beeinflusst daher die Lenkeigenschaften der Achse. Die Fahrwerkslager müssen folglich in der radialen, torsionalen, kardanischen und axialen Kennung abgestimmt werden. Elastische Fahrwerkslager dienen weiterhin zur Entkopplung der Achse von Fahrbahnschwingungen.

Die Kennungskonstellation der radialen Steifigkeit im Verhältnis zur torsionalen Steifigkeit ist nur mit einem hohen Aufwand zu realisieren. Es ist in diesem Zusammenhang bereits bekannt, Fahrwerkslager mit Zwischenrohren in dem Gummi zu versehen. Diese Vorgehensweise ist relativ aufwändig, da durch das zusätzliche Zwischenrohr eine Kalibrierung der inneren und äußeren Lagerhülsen erforderlich ist.

Es sind auch Fahrwerkslager mit geschlitzten Rohren bekannt. Diese sind etwas preiswerter herstellbar, da eine Kalibrierung entfällt. Der Montageaufwand in den Lenkern ist allerdings höher.

Hiervon ausgehend, liegt der Erfindung die Aufgabe zu Grunde, ein elastisches Fahrwerkslager dahingehend weiterzuentwickeln, dass es eine hohe Radialsteifigkeit bei gleichzeitig niedriger Torsions- und Kardaniksteifigkeit aufweist und zudem kostengünstig herstellbar ist.

Diese Aufgabe ist bei einem Fahrwerkslager mit dem Merkmal des Patentanspruchs 1 gelöst.

Vorteilhafte Weiterbildungen des elastischen Fahrwerkslagers sind Gegenstand der Unteransprüche.

Das Fahrwerkslager gemäß Patentanspruch 1 besteht aus einem Lagerinnenteil, welches radial von einem Lageraußenteil umgeben ist. Üblicherweise handelt es sich bei dem Lagerinnenteil und bei dem Lageraußenteil um rohrförmige Bauteile. Zwischen dem Lagerinnenteil und Lageraußenteil ist eine mit dem Lagerinnenteil festhaftend verbundene Elastomerfeder angeordnet. Sie ist insbesondere durch Vulkanisation mit dem Lagerinnenteil verbunden. Wesentlich bei dem erfindungsgemäßen Fahrwerkslager ist, dass die Elastomerfeder radial außenseitig zwischen Schalensegmenten eingebettet ist, die von dem Lageraußenteil unverlierbar gehalten sind. Die Schalensegmente weisen im axialen Längsschnitt eine gewellte Innenkontur mit einem radial nach innen weisenden Mittelsteg und mit radial nach innen weisenden Randstegen auf. Das Elastomerbauteil besitzt im Gegenzug zwei im Abstand zueinander verlaufende Ringwülste, welche in der Einbaulage unter radialer Vorspannung durch die Schalensegmente zwischen den Mittelsteg und die Randstege greifen, wobei der Mittelsteg die Ringwülste in der Einbaulage in Axialrichtung auseinander drängt.

Das Wesentliche bei dem erfindungsgemäßen Fahrwerkslager ist die Abstimmung der Konturen der Schalensegmente und der Elastomerfeder. Die Elastomerfeder wird von den Schalensegmenten zusammengepresst und ist von dem insbesondere rohrförmigen Lageraußenteil gehalten. Durch die Interferenz der Außenkonturen der Elastomerfeder mit der Innenkontur der Schalensegmente wird eine Lagerfunktion realisiert, die hohe Radialsteifigkeiten mit einer ausgeprägten und abstimmbaren Radialfunktion ermöglicht. Diese wird durch die Druckkammerung der Ringwülste innerhalb der konturierten Schalensegmente realisiert. Bei der erfindungsgemäßen Konfiguration ergibt sich eine hohe Radialsteifigkeit bei gleichzeitig niedriger Torsionssteifigkeit und zugleich niedriger Kardaniksteifigkeit. Durch die Druckkammerung der Elastomerfeder innerhalb der Schalensegmente ergibt sich eine insgesamt hohe Lebensdauer. Das erfindungsgemäße Fahrwerkslager ist kostengünstig herstellbar und kommt ohne zusätzliche Zwischenrohre aus.

Die Schalensegmente können aus Kunststoff hergestellt sein und sind beispielsweise als Halbschalen konfiguriert.

Die axiale Kennung des Fahrwerkslagers wird wesentlich dadurch bestimmt, dass der Mittelsteg die Ringwülste in der Einbaulage in Axialrichtung auseinander drängt. Das bedeutet, dass der Mittelsteg eine Geometrie aufweist, die im unmontierten Zustand nicht deckungsgleich mit der Kontur der Elastomerfeder ist. Vielmehr ist vorgesehen, dass der Abstand zwischen den tiefsten Punkten zwischen dem Mittelsteg und den Randstegen kleiner ist als der Abstand zwischen den höchsten Punkten der Ringwülste. Mit anderen Worten ist der Mittelsteg gewissermaßen breiter als die Nut zwischen den Ringwülsten, so dass diese allein durch die unterschiedlichen Breitenverhältnisse bzw. Abstände zwischen den tiefsten und höchsten Punkten auseinander gedrängt werden.

Darüber hinaus ist vorgesehen, dass der Mittelsteg beiderseits Flanken aufweist, deren gegenüber der Längsachse des Fahrwerklagers gemessener, Steigungswinkel in einem Bereich von 30° - 60° liegt. Durch diesen geringen Steigungswinkel, der insbesondere bei 45°+/- 5° liegt, ergeben sich recht flach ansteigende Flanken, so dass der Mittelsteg insgesamt eine große Breite besitzt. Dadurch werden die radial am weitesten vorstehenden Bereiche der Ringwülste stärker auseinander gedrängt als die in Radialrichtung näher am Lagerinnenteil liegenden Bereiche der Ringwülste.

Darüber hinaus kann der Steigungswinkel der einander zugewandten Flanken der Ringwülste größer als der Steigungswinkel der Flanken des Mittelstegs sein. Auch durch diese Unterschiede in den Steigungswinkeln werden die Ringwülste in der Einbaulage auseinander gedrängt.

Durch das Verdrängen der Ringwülste in entgegengesetzte Richtungen wird der Mittelsteg gewissermaßen zwischen den Ringwülsten eingeklemmt, so dass das Lageraußenteil gegenüber dem Lagerinnenteil in Axialrichtung wie auch in Radialrichtung vorgespannt ist. Die Ringwülste stützen sich aber vorzugsweise nicht nur an dem Mittelsteg, sondern auch an den Randstegen ab. Daher ist vorgesehen, dass der Steigungswinkel der einander zugewandeten Flanken der Randstege größer ist als der Steigungswinkel der Flanken des Mittelstegs. Die Randstege dienen gewissermaßen als äußeren Anschlag für die Elastomerfeder bei axialer Belastung. Wichtig ist, dass zwischen den Randstegen und dem Mittelsteg zwei nutförmige Druckkammern gebildet sind, die jeweils einen gerundeten Nutgrund aufweisen, sowie gerundete Übergänge zu dem Mittelsteg bzw. zu den Randstegen, so dass sich die Ringwülste formschlüssig und möglichst flächig an die Innenkontur der Lagerschalen anschmiegen können.

Die radiale Abstützung des Lageraußenteils an dem Lagerinnenteil erfolgt allerdings nicht ausschließlich über die Ringwülste, sondern zu wesentlichen Teilen auch über einen dem Mittelsteg radial gegenüberliegenden Sattelabschnitt, welcher in der Einbaulage von dem Mittelsteg komprimiert wird. Dieser Sattelabschnitt verbindet die beiden Ringwülste miteinander. In radialer Richtung ist der Sattelabschnitt etwa halb so hoch wie die Ringwülste.

Als besonders kostengünstig wird es angesehen, wenn die Schalensegmente, die vorzugsweise aus Kunststoffhalbschalen gefertigt sind, durch Verpressen des Lageraußenteils gehalten sind. Die kostengünstige Art der Montage ermöglicht eine sichere Fixierung der einzelnen Bauteile und stellt sicher, dass das Kunststoffteil nicht aus dem Lageraußenteil herausrutschen kann. Die Verpressung soll insbesondere stirnseitig der Schalensegmente erfolgen.

Die Erfindung wird nachfolgend anhand eines in einer schematischen Zeichnung dargestellten Ausführungsbeispiels näher erläutert. Es zeigt:
- Figur 1: einen Längsschnitt durch ein elastisches Fahrwerkslager nach der Montage der Einzelteile und
- Figur 2: das Lagerinnenteil mit der Elastomerfeder und den Schalensegmenten vor der Montage.

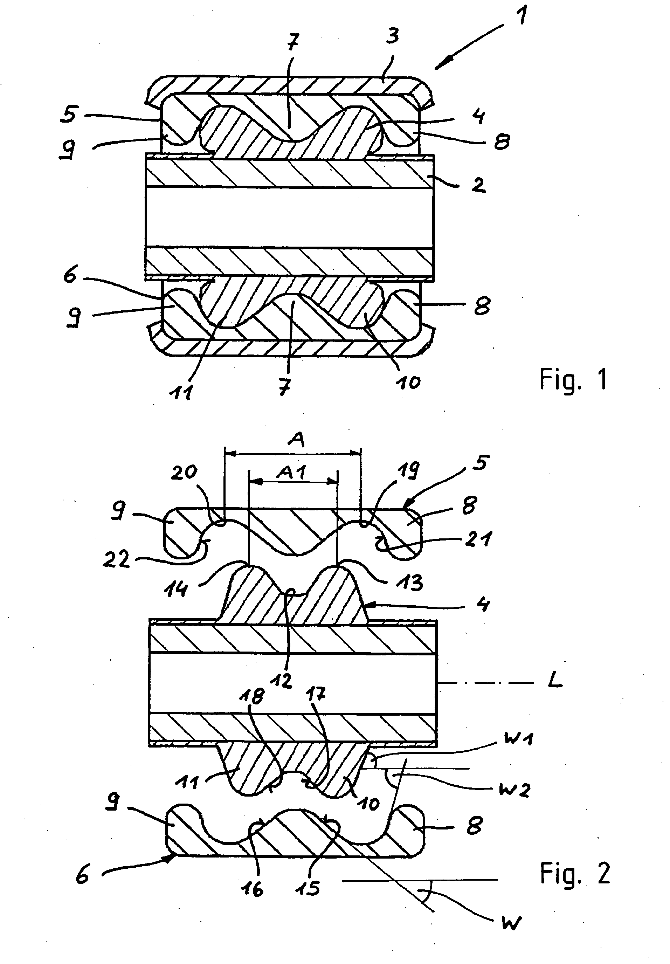

In Figur 1 ist ein elastisches Fahrwerkslager 1 dargestellt, das sich aus einem Lagerinnenteil 2, einem Lageraußenteil 3, einer mit dem Lagerinnenteil 2 fest haftend verbundenen Elastomerfeder 4 und zwei Schalensegmenten 5, 6 aus Kunststoff zusammensetzt. Das Lagerinnenteil 2 ist eine Metallhülse. Das Lageraußenteil ist ebenfalls eine Hülse, deren Stirnseiten radial randseitig leicht nach innen verpresst sind, um die Schalensegmente 5, 6 in Axialrichtung zu fixieren.

Wie anhand einer Vergleichsbetrachtung der Figuren 1 und 2 zu erkennen ist, wird die Elastomerfeder 4 durch radiales Zusammenpressen der Schalensegmente 5, 6, die in diesem Ausführungsbeispiel als Halbschalen konfiguriert sind, verformt, so dass sich die in Figur 1 dargestellte Endlage für die Elastomerfeder 4 ergibt. Die Verformung der Elastomerfeder 4 erfolgt, in Längsrichtung der Elastomerfeder 4 gesehen, stark ungleichmäßig. Dies ist auf unterschiedliche Innen- und Außenkonturen der Elastomerfeder 4 bzw. der Schalensegmente 5, 6 zurückzuführen. Die Schalensegmente 5, 6 besitzen eine sehr stark profilierte Innenkontur, die man als Wellenkontur mit einem Mittelsteg 7 und ebenso radial nach innen weisenden Randstegen 8, 9 bezeichnen kann. Die Übergänge zwischen dem Mittelsteg 7 und den Randstegen 8, 9 sind durch groß gewählte Radien gerundet ausgeführt, ebenso wie auch die Elastomerfeder 4 eine stark profilierte, allerdings gerundete Außenkontur aufweist.

In den Zeichnungen ist zu erkennen, dass die Elastomerfeder 4 zwei identisch konfigurierte, in Radialrichtung vorstehende Ringwülste 10, 11 mit gerundeten Spitzen aufweist. Die Ringwülste 10, 11 befinden sich in gleichem Abstand von dem Mittelsteg 7, wobei sie an einen Sattelabschnitt 12 der Elastomerfeder 4 grenzen. Der Sattelabschnitt 12 steht etwa halb so hoch über dem Außenumfang des Lagerinnenteils 2 vor, wie die höchsten Punkte 13, 14 der Ringwülste 10, 11.

Die Ringwülste 10, 11 werden beim Zusammenbau des elastischen Fahrwerklagers 1 deshalb auseinander gedrückt, weil der Mittelsteg 7 Flanken 15, 16 aufweist, deren Steigungswinkel W gegenüber der Längsachse L des Fahrwerklagers 1 relativ klein ist und in diesem Ausführungsbeispiel 40° beträgt. Die Steigungswinkel der einander zugewandten Flanken 17, 18 der Ringwülste 10, 11 sind allerdings größer gewählt als der Steigungswinkel W der Flanken 15, 16 des Mittelstegs 7. Dadurch werden die über den Sattelabschnitt 12 radial vorstehenden Bereiche der Ringwülste 10, 11 zwangsläufig in Axialrichtung nach außen verlagert und daher in Richtung zu den tiefsten Punkten 19, 20 der Schalensegmente 5, 6 gedrängt. Der Abstand A der tiefsten Punkte 19, 20 in den Schalensegmenten 5, 6 ist größer als der Abstand A1 zwischen den höchsten Punkten 13, 14 der Ringwülste 10, 11.

Das radiale und axiale Verdrängen der Ringwülste 10, 11 führt dazu, dass diese an den sich gegenüberliegenden Flanken 21, 22 der Randstege zur Anlage gelangen, deren Steigungswinkel W2 noch größer ist als der Steigungswinkel W1 der Ringwülste 10, 11. Aus Figur 1 wird deutlich, wie die Ringwülste 10, 11 letztendlich in den Bereichen zwischen dem Mittelsteg 7 und den Randstegen 8, 9 aufgenommen werden. Diese Bereiche können auch als Druckkammern bezeichnet werden. Es ist anzumerken, dass diese Druckkammern nicht vollständig gefüllt sind, sondern im Bereich zu den Randstegen 8, 9 hin etwas Freiraum haben. Die Randstege 8, 9 befinden sich mit freien Enden ohnehin in radialem Abstand zu dem Lagerinnenteil 2 bzw. dem den Lagerinnenteil 2 umgebenden Bereich der Elastomerfeder 4, der gewissermaßen als dünnwandiger Überzug an dem Lagerinnenteil haftet, selbst aber nicht an der Kraftübertragung zwischen dem Lagerinnenteil 2 und dem Lageraußenteil 3 teilnimmt.

Die Eigenschaften des elastischen Fahrwerkslagers hängen signifikant von der gewählten Geometrie der Schalensegmente 5, 6 und der Elastomerfeder 4 ab. Darüber hinaus spielt natürlich auch die Werkstoffwahl der Elastomerfeder 4 eine entscheidende Rolle.

### Bezugszeichen:

- 1 -: elastisches Fahrwerkslager
- 2 -: Lagerinnenteil
- 3 -: Lageraußenteil
- 4 -: Elastomerfeder
- 5 -: Schalensegment
- 6 -: Schalensegment
- 7 -: Mittelsteg
- 8 -: Randsteg
- 9 -: Randsteg
- 10 -: Ringwulst
- 11 -: Ringwulst
- 12 -: Sattelabschnitt
- 13 -: höchster Punkt
- 14 -: höchster Punkt
- 15 -: Flanke
- 16 -: Flanke
- 17 -: Flanke
- 18 -: Flanke
- 19 -: tiefster Punkt
- 20 -: tiefster Punkt
- 21 -: Flanke
- 22 -: Flanke

- A -: Abstand
- A1 -: Abstand
- L -: Längsachse
- W -: Steigungswinkel
- W1 -: Steigungswinkel
- W2 -: Steigungswinkel

## Patentansprüche

1. Elastisches Fahrwerkslager mit einem Lagerinnenteil (2), welches radial von einem Lageraußenteil (3) umgeben ist, wobei zwischen Lagerinnenteil (2) und Lageraußenteil (3) eine mit dem Lagerinnenteil (2) festhaftend verbundene Elastomerfeder (4) angeordnet ist, **dadurch gekennzeichnet, dass** die Elastomerfeder (4) radial außenseitig zwischen Schalensegmenten (5, 6) eingebettet ist, die von dem Lageraußenteil (3) unverlierbar gehalten sind, wobei die Schalensegmente (5, 6) im axialen Längsschnitt eine gewellte Innenkontur mit einem radial nach innen weisenden Mittelsteg (7) und mit radial nach innen weisenden Randstegen (8, 9) aufweisen, wobei die Elastomerfeder (4) zwei im Abstand zum Mittelsteg (7) verlaufende Ringwülste (10, 11) aufweist, welche in der Einbaulage unter radialer Vorspannung durch die Schalensegmente (5, 6) zwischen den Mittelsteg (7) und die Randstege (8, 9) greifen, wobei der Mittelsteg (7) die Ringwülste (10, 11) in der Einbaulage in Axialrichtung auseinander drängt.

2. Elastisches Fahrwerkslager nach Anspruch 1, **dadurch gekennzeichnet, dass**, der Abstand (A) zwischen den tiefsten Punkten (19, 20) zwischen dem Mittelsteg (7) und den Randstegen (10, 11) größer ist als der Abstand (A1) zwischen den höchsten Punkten (13, 14) der Ringwülste (10,11).

3. Elastisches Fahrwerkslager nach Anspruch 1 oder 2, **dadurch gekennzeichnet, dass** der Mittelsteg (7) beiderseits Flanken (15, 16) aufweist, deren gegenüber der Längsachse (L) des Fahrwerkslagers (1) gemessener Steigungswinkel (W) in einem Bereich von 30° bis 60° liegt.

4. Elastisches Fahrwerkslager nach Anspruch 3, **dadurch gekennzeichnet, dass** der Steigungswinkel (W1) der einander zugewandten Flanken (17, 18) der Ringwülste (10, 11) größer ist als der Steigungswinkel (W) der Flanken (15, 16) des Mittelstegs (7).

5. Elastische Fahrwerkslager nach Anspruch 3 oder 4, **dadurch gekennzeichnet, dass** der Steigungswinkel (W2) der einander zugewandten Flanken (21, 22) der Randstege (8, 9) größer ist als der Steigungswinkel (W) der Flanken (15, 16) des Mittelstegs (7).

6. Elastisches Fahrwerkslager nach einem der Ansprüche 1 bis 5, **dadurch gekennzeichnet, dass** zwischen den Ringwülsten (10, 11) ein dem Mittelsteg (7) radial gegenüberliegender Sattelabschnitt (12) ausgebildet ist, welcher in der Einbaulage von dem Mittelsteg (7) komprimiert wird.

7. Elastisches Fahrwerkslager nach einem der Ansprüche 1 bis 6, **dadurch gekennzeichnet, dass** die Ringwülste (10, 11) in der Einbaulage durch Verdrängung an den Flanken (21, 22) der Randstege (8, 9) zur Anlage gelangen.

8. Elastisches Fahrwerkslager nach einem der Ansprüche 1 bis 7, **dadurch gekennzeichnet, dass** die Schalensegmente (5, 6) Halbschalen sind.

9. Elastisches Fahrwerkslager nach einem der Ansprüche 1 bis 8, **dadurch gekennzeichnet, dass** die Schalensegmente (5, 6) aus Kunststoff bestehen.

10. Elastisches Fahrwerkslager nach einem der Ansprüche 1 bis 9, **dadurch gekennzeichnet, dass** die Schalensegmente (5, 6) durch Verpressen des Lageraußenteils (3) gehalten sind.

## Claims

1. Elastic chassis mount having an inner mount part (2) which is surrounded radially by an outer mount part (3), with an elastomer spring (4) which is firmly bonded to the inner mount part (2) being arranged between the inner mount part (2) and the outer mount part (3), **characterized in that** the elastomer spring (4) is embedded radially at the outside between shell segments (5, 6) which are captively retained by the outer mount part (3), with the shell segments (5, 6) having, in axial longitudinal section, a corrugated inner contour with a radially inwardly pointing central web (7) and with radially inwardly pointing edge webs (8, 9), with the elastomer spring (4) having two annular beads (10, 11) which run with a spacing to the central web (7) and which, in the installed position, engage with radial preload through the shell segments (5, 6) between the central web (7) and the edge webs (8, 9), with the central web (7) forcing the annular beads (10, 11) apart in the axial direction in the installed position.

2. Elastic chassis mount according to Claim 1, **characterized in that** the spacing (A) between the lowest points (19, 20) between the central web (7) and the edge webs (10, 11) is greater than the spacing (A1) between the highest points (13, 14) of the annular beads (10, 11).

3. Elastic chassis mount according to Claim 1 or 2, **characterized in that** the central web (7) has flanks (15, 16) at both sides, the gradient angle (W) of which flanks (15, 16) measured in relation to the longitudinal axis (L) of the chassis mount (1) is in a range from 30° to 60°.

4. Elastic chassis mount according to Claim 3, **characterized in that** the gradient angle (W1) of those flanks (17, 18) of the annular beads (10, 11) which face towards one another is greater than the gradient angle (W) of the flanks (15, 16) of the central web (7).

5. Elastic chassis mount according to Claim 3 or 4, **characterized in that** the gradient angle (W2) of those flanks (21, 22) of the edge webs (8, 9) which face towards one another is greater than the gradient angle (W) of the flanks (15, 16) of the central web (7).

6. Elastic chassis mount according to one of Claims 1 to 5, **characterized in that** a saddle section (12) which is situated radially opposite the central web (7) is formed between the annular beads (10, 11), which saddle section (12) is compressed by the central web (7) in the installed position.

7. Elastic chassis mount according to one of Claims 1 to 6, **characterized in that** the annular beads (10, 11) come into contact against the flanks (21, 22) of the edge webs (8, 9) in the installed position by being displaced.

8. Elastic chassis mount according to one of Claims 1 to 7, **characterized in that** the shell segments (5, 6) are half-shells.

9. Elastic chassis mount according to one of Claims 1 to 8, **characterized in that** the shell segments (5, 6) are composed of plastic.

10. Elastic chassis mount according to one of Claims 1 to 9, **characterized in that** the shell segments (5, 6) are retained by means of compression of the outer mount part (3).

## Revendications

1. Support de train d'atterrissage élastique avec une partie interne de support (2), laquelle est entourée radialement par une partie externe de support (3), un ressort à élastomère (4) relié de façon fixe à la partie interne de support (2) étant disposé entre la partie interne de support (2) et la partie externe de support (3), **caractérisé en ce que** le ressort à élastomère (4) est inséré radialement vers l'extérieur entre des segments à coquille (5, 6), lesquels sont fixés définitivement par la partie externe de support (3), les éléments à coquille (5, 6) comportant dans la section longitudinale axiale un contour interne ondulé avec une tige centrale (7) orientée radialement vers l'intérieur et des tiges de bordure (8, 9) orientées radialement vers l'extérieur, le ressort à élastomère (4) comportant deux renflements annulaires (10, 11) s'éloignant de la tige centrale (7), lesquels renflements s'engrènent dans la position de montage sous une précontrainte radiale par les éléments à coquille (5, 6) entre la tige centrale (7) et les tiges de bordure (8, 9), la tige centrale (7) sortant des renflements annulaires (10, 11) dans la position de montage dans la direction axiale.

2. Support de train d'atterrissage élastique selon la revendication 1, **caractérisé en ce que** l'écart (A) entre les points (19, 20) les plus profonds entre la tige centrale (7) et les tiges de bordure (10, 11) est supérieur à l'écart (A1) entre les points (13, 14) les plus élevés des renflements annulaires (10, 11).

3. Support de train d'atterrissage élastique selon la revendication 1 ou 2, **caractérisé en ce que** la tige centrale (7) comporte des flancs (15, 16) des deux côtés, dont l'angle d'inclinaison (W) mesuré par rapport à l'axe longitudinal (L) du support de train d'atterrissage (1) se situe dans une plage allant de 30° à 60°.

4. Support de train d'atterrissage élastique selon la revendication 3, **caractérisé en ce que** l'angle d'inclinaison (W1) des flancs opposés l'un à l'autre (17, 18) des renflements annulaires (10, 11) est supérieur à l'angle d'inclinaison (W) des flancs (15, 16) de la tige centrale (7).

5. Support de train d'atterrissage élastique selon la revendication 3 ou 4, **caractérisé en ce que** l'angle d'inclinaison (W2) des flancs opposés l'un à l'autre (21, 22) des tiges de bordure (8, 9) est supérieur à l'angle d'inclinaison (W) des flancs (15, 16) de la tige centrale (7).

6. Support de train d'atterrissage élastique selon l'une quelconque des revendications 1 à 5, **caractérisé en ce qu'**une section d'étrier (12) opposée radialement à la tige centrale (7) est formée entre les renflements annulaires (10, 11), laquelle section est comprimée par la tige centrale (7) dans la position de montage.

7. Support de train d'atterrissage élastique selon l'une quelconque des revendications 1 à 6, **caractérisé en ce que** les renflements annulaires (10, 11) parviennent dans la position de montage, par déplacement, aux flancs (21, 22) des tiges de bordure (8, 9) pour installation.

8. Support de train d'atterrissage élastique selon l'une quelconque des revendications 1 à 7, **caractérisé en ce que** les éléments à coquille (5, 6) sont des semi-coques.

9. Support de train d'atterrissage élastique selon l'une quelconque des revendications 1 à 8, **caractérisé en ce que** les éléments à coquille (5, 6) sont en plastique.

10. Support de train d'atterrissage élastique selon l'une quelconque des revendications 1 à 9, **caractérisé en ce que** les éléments à coquille (5, 6) sont maintenus par compression de la partie externe de support (3).
